# EUROPÄISCHE PATENTSCHRIFT

(11) **EP 4 192 604 B1**
(45) Veröffentlichungstag und Bekanntmachung des Hinweises auf die Patenterteilung: **09.04.2025**
(21) Anmeldenummer: 21769399.3
(22) Anmeldetag: 26.08.2021
(51) Int. Cl.: B01D 53/14, B01D 53/26

(54) **TIEFTEMPERATUR-CO2-ABSCHEIDUNG AUS ABGAS**
LOW-TEMPERATURE CO2 SEPARATION FROM EXHAUST GASES
SÉPARATION DE CO2 DE GAZ D'ÉCHAPPEMENT A BASSE TEMPÉRATURE

(43) Veröffentlichungstag der Anmeldung: 14.06.2023
(73) Patentinhaber: Kirchner Energietechnik GmbH, 12459 Berlin (DE)
(72) Erfinder: KIRCHNER, Wolfgang, 50169 Kerpen (DE); KIRCHNER, Hans-Walter, 14109 Berlin (DE)
(74) Vertreter: ETL IP Patent- und Rechtsanwaltsgesellschaft mbH
(86) Internationale Anmeldenummer: PCT/EP2021/073590
(87) Internationale Veröffentlichungsnummer: WO 2023/025385

(56) Entgegenhaltungen:
- WO-A1-2004/026441
- US-A- 2 863 527
- US-A- 5 067 972

## Beschreibung

Die Erfindung betrifft ein Verfahren zur Tieftemperatur-CO₂-Abscheidung aus Abgasen, sowie eine Vorrichtung hierzu.

Einen aktuellen Überblick über den Stand der Forschung und Entwicklung zur Abscheidung und Speicherung von CO₂ aus Abgasen gibt der Technologiebericht 2.3 CO₂-Abscheidung und Speicherung - CCS" des Forschungszentrums Jülich vom 17. Dezember 2017. Für die CO₂ Abscheidung aus Abgasen nach der Verbrennung (Post-Combustion Verfahren) sind gemäß dieser Untersuchung überwiegend Absorptionsverfahren bei Umgebungsdruck und Umgebungstemperatur in der Forschung und Entwicklung sowie in einem sehr frühen Forschungsstadium membranbasierte Verfahren (S. 9 des Berichts).

Kryogene Verfahren gelten bislang im Vergleich zu den Verfahren der CO₂-Abscheidung bei höheren Temperaturen als unwirtschaftlich, da bei den bisher in Erwägung gezogenen Verfahren zur kryogenen CO₂-Abscheidung zu viel Energie benötigt wird. Verfahren zur Gasreinigung und -abscheidung sind beispielsweise in US 2 863 527 A, US 5 067 972 A und WO 2004/026441 A1 offenbart.

Zur unterirdischen Speicherung von CO₂ kommen aus Sicherheitsaspekten nur Speicher mit einer Mindesttiefe von 800 m in Frage. Um in einer solchen Tiefe eine Einlagerung vornehmen zu können, muss sich das CO₂ aufgrund des dort herrschenden Drucks und zur maximalen Ausnutzung des vorhandenen Lagervolumens im superkritischen Aggregatzustand befinden. Hierzu ist ein Mindestdruck von 74 bar bei 31°C notwendig. Da alle bisher eingesetzten CCS-Abscheideverfahren CO₂ bei Normaldruck abscheiden, muss es vor der Einlagerung sehr viel Energie für die Verdichtung auf mindestens 74 bar aufgewendet werden.

Aufgabe der Erfindung der Tieftemperatur-Abgas-CO₂-Abscheidung ist es, ein Verfahren zur Abscheidung von CO₂ aus Abgasen zu entwickeln, das als kryogenes Verfahren mit einem deutlich geringen Energieaufwand für das Abscheiden und die Verdichtung des CO₂ betrieben werden kann, als dies bei den bekannten CCS-Verfahren möglich ist.

Diese Aufgabe wird durch ein Verfahren und eine Vorrichtung mit den Merkmalen der unabhängigen Ansprüche gelöst.

Somit betrifft ein erster Aspekt der Erfindung ein Verfahren zur Tieftemperatur Abscheidung von Kohlendioxid aus Abgasen, aufweisend die folgenden Schritte:
- Verdichtung des Abgases und Kühlung auf einen vorbestimmten Wert, welcher oberhalb des Gefrierpunkts von Wasser liegt
- Trocknung des Abgases
- erneute Kühlung des Abgases auf einen zweiten vorbestimmten Wert, in welchem das Abgas bevorzugt in einem kryogenen Zustand ist
- Gaswäsche des getrockneten Abgases durch physikalische Absorption von im Abgas enthaltenem Kohlendioxid (CO₂) mittels Durchleitung des getrockneten und gekühlten Abgasstroms durch ein CO₂-absorbierendes Lösungsmittel, wobei der zweite vorbestimmte Wert der Temperatur des Abgases bei der, insbesondere kryogenen Gaswäsche entspricht und
- thermische Desorption des absorbierten CO₂ in vorzugsweise zwei Druckstufen.

Der Vorteil besteht insbesondere in einer Zugänglichmachung eines energiesparenden kryogenen und rein physikalischen Prozesses zur Abgasaufbereitung und in einer Bereitstellung von dem Abgas entzogenen sortenreinen und damit lagerungsfähigen CO₂s.

Das erfindungsgemäße Verfahren dient der Entlastung der Atmosphäre von klimaschädigenden CO₂-Emissionen aus Abgasen, indem das CO₂ unter Druck bei tiefen Temperaturen durch eine Wäsche mit einem geeigneten Lösungsmittel aus den Abgasen entfernt wird. Die Abfuhr der Wärme, die bei der Lösung des CO₂ im Waschmittel entsteht, erfolgt in dem erfindungsgenäßen Verfahren durch Kälte, die durch Expansion des gewaschenen Abgases erzeugt wird. Dadurch wird der Energieaufwand für eine externe Kälteerzeugung durch Kältemaschinen vermieden und ein deutlicher energetischer Vorteil erzielt.
- Nachfolgend wird der größte Teil des im Lösungsmittel gelösten CO₂ unter Druck durch Erwärmung des beladenen Lösungsmittels desorbiert. In einem weiteren Schritt wird das unter Druck teilentlastete Lösungsmittel entspannt und auf der niedrigen Druckstufe wird ein weiterer Teil des gelösten CO₂ desorbiert. Dadurch wird das Lösungsmittel weitgehend regeneriert.

Mit der thermischen Desorption in 2 Druckstufen wird erreicht, dass für den größten Teil des bei hohem Druck desorbierten CO₂ nur wenig Energie für die weitere Druckerhöhung zur unterirdischen Einlagerung erforderlich ist.
- Das in den Desorptionsstufen abgetrennte CO₂ kann nachfolgend entweder nach Erhöhung des Drucks unterirdisch eingelagert (CCS-Verfahren - Carbon Capture and Storage) oder einer anderweitigen Verwendung wie z. B. der Nutzung für CO₂-basierte Kunststoffe zugeführt werden.

Das erfindungsgemäße Verfahren der Tieftemperatur-Abgas-CO₂-Abscheidung gehört zu den kryogenen Verfahren zur Abscheidung von CO₂ aus Abgasen.

Verwendung findet das erfindungsgemäße Verfahren in allen Prozessen, bei denen Abgas anfällt, wie z. B.
- bei der Abtrennung des CO₂ in den Abgasen von Blockheizkraftwerken,
- der Abtrennung des CO₂ in den Abgasen von Kohlekraftwerken,
- der Abtrennung des CO₂ in den Abgasen von Verbrennungsmotoren und
- der Abtrennung des CO₂ in den Abgasen von Gasturbinen.

Besonders vorteilhaft lässt sich das erfindungsgemäße Verfahren in Prozessen der Kraft-Wärme-Koppelung einsetzen. Zwar wird ein Teil der Energie des Kraftwerksprozesses für die CO₂-Abscheidung gebraucht, wodurch der elektrische Wirkungsgrad des Kraftwerksprozesses reduziert wird. Gleichzeitig fällt jedoch bei dem erfindungsgemäßen Verfahren in den besonders bevorzugten Ausgestaltungen Wärme an, die für Heizzwecke genutzt werden kann, und den thermischen Wirkungsgrad, beispielsweise einer BHKW-Anlage verbessert, so dass keine wesentliche Verschlechterung des Gesamtwirkungsgrades der Kraft-Wärme-Koppelung eintritt.

So ist durch Ergänzung von Blockheizkraftwerken mit dem erfindungsgemäßen Verfahren eine emissionsfreie Strom- und Wärmeversorgung auch bei Nutzung fossiler Brennstoffe ohne größere Verschlechterung im Gesamtwirkungsgrad der BHKW-Anlage möglich.

Die Trocknung des Abgases erfolgt beispielsweise durch physikalische Trocknung mittels Kühlung auf eine Temperatur unterhalb des Gefrierpunktes von Wasser, oder chemisch mittels Schwefelsäure, Kupfersulfat, Silikagel oder Ähnliches.

In bevorzugter Ausgestaltung der Erfindung, ist vorgesehen, dass das Lösungsmittel Methanol aufweist oder aus diesem besteht. Dieses Lösungsmittel zeigt bei tiefen Temperaturen ein hohes Absorptionsvermögen gegenüber CO₂, welches bei Temperaturerhöhung jedoch recht leicht wieder freigesetzt wird.

Es ist bevorzugt, dass das Lösungsmittel nach der Desorption des CO₂ wiederverwendet wird. Dies reduziert den Lösungsmittelverbrauch erheblich. Insbesondere wird das Lösungsmittel im gleichen Verfahren durch Rückführung des Lösungsmittels in das Verfahren wiederverwendet. Um den Wirkungsgrad der CO₂ Aufnahme bei dieser Rückführung nicht zu reduzieren, werden Lösungsmittel verwendet, die ein sehr hohes rein physikalisches Absorptionsvermögen gegenüber CO₂ aufweisen, wie beispielsweise Methanol.

In bevorzugter Ausgestaltung der Erfindung ist vorgesehen, dass das Abgas vor dem Verdichten bereits gekühlt wird. Dieses zweistufige Verfahren reduziert zum einen den Energiebedarf des Verfahrens, zum anderen ermöglicht es die Nutzung einer Abhitze des Abgases zur Produktion von Prozessdampf, welcher an einer anderen Stelle im Verfahren zur Erhitzung von Prozessgasen nutzbar ist.

Somit ist ferner bevorzugt, dass mittels eines Abhitzedampferzeugers vor dem Kühlen des zu kühlenden Abgases ein Prozessdampf erzeugt wird, welcher bevorzugt zur Bereitstellung von thermischer Energie beim thermischen Desorptionsprozess des absorbierten CO₂ eingesetzt wird. Dies reduziert vorteilhaft den Energiebedarf des Verfahrens weiter.

Zur Vorbereitung einer CO₂- Einlagerung ist es nötig, das CO₂ auf einen Einlagerungsdruck zu komprimieren. Dieser liegt zur Einlagerung auf 800m bei 31° bei 74bar, für tiefere Lagerstätten sind wesentlich höhere Drücke erforderlich. Bei der Verdichtung des desorbierten CO₂ wird zunächst der bei niedrigem Druck desorbierte kleinere CO₂-Teilstrom auf den Druck des bei Hochdruck desorbierten größeren CO₂-Teilstrom verdichtet und die beiden CO₂-Teilstöme werden zusammengeführt.

Die Komprimierung der zusammengeführten CO₂-Teilstöme ist auf zweierlei Weise bevorzugt. Zum einen in einem einstufigen Prozessschritt, welcher die Komprimierung des desorbierten gasförmigen CO₂ vorsieht. Dies hat den Vorteil, dass ein geringerer Kältebedarf erforderlich wird. Zum anderen erfolgt die Komprimierung in einem zweistufigen Prozess, wobei das gasförmige desorbierte CO₂ zunächst verflüssigt und nachfolgend aus dem flüssigen Zustand auf den Einlagerungsdruck komprimiert wird. Dies hat wiederum den Vorteil, dass weniger Verdichtungsarbeit geleistet werden muss, was sich vor allem bei hohem Druck der CO₂-Einlagerung, der bei tiefen Lagerstätten erforderlich ist, als vorteilhaft erweist.

Mit Vorteil wird das gewaschene Abgas, welches deutlich überwiegend Stickstoff enthält, nach der Gaswäsche Arbeit leistend entspannt und/oder befeuchtet. Somit ist ein Gas erhältlich, welches ohne Klimaschädigung in die Atmosphäre entlassen werden kann.

Mit Vorteil wird die für die erforderliche Kälte für die Abkühlung des Abgases, die Abfuhr der Lösungswärme der CO₂-Absortion und die Kondensation des CO₂ durch Expansion des gewaschenen Abgases bereitgestellt.

Beispielrechnungen haben gezeigt, dass in Abhängigkeit von der Abgaszusammensetzung hierfür die Verdichtung des Abgases auf einen Druck zwischen 8 bar und 15 bar ausreichend ist.

Ein weiterer Aspekt der Erfindung betrifft eine Vorrichtung zum Abscheiden von CO₂ aus Abgas mit dem erfindungsgemäßen Verfahren. Die erfindungsgemäße Vorrichtung umfasst einen Abgasstrom,
- einen Verdichter zum verdichten des Abgasstroms,
- einen stromab des Verdichters angeordneten und durch den Abgasstrom fluidführend mit diesem verbundene Wärmetauscher zum Kühlen des verdichteten Abgasstroms,
- einen stromab des Wärmetauschers angeordneten und durch den Abgasstrom fluidführend mit diesem verbundenen CO₂-Absorber, aufweisend ein mit dem Abgasstrom in Kontakt tretendes flüssiges Lösungsmittel, insbesondere Methanol
- eine fluidführend mit dem CO₂-Absorber verbundene Desorptionseinheit zur thermischen Desorption von im flüssigen Lösungsmittel gebundenen CO₂ in zwei Druckstufen,
- ein mit dem Auslass der Desorptionseinheit für in einer zweiten Druckstufe , insbesondere bei niedrigem Druck desorbiertes CO₂ fluidführend verbundener erster CO₂-Verdichter, wobei in einer ersten Ausführungsform der erfindungsgemäßen Vorrichtung ein mit dem ersten CO₂-Verdichter und dem Auslass der Desorptionseinheit für in einer ersten Druckstufe, insbesondere bei hohem Druck desorbiertes CO₂, fluidtechnisch verbundener zweiter CO₂-Verdichter eingesetzt, von dem aus das verdichtete CO₂ abgeleitet wird.

Alternativ wird in einer zweiten Ausführungsform der Vorrichtung ein mit dem ersten CO₂-Verdichter und dem Auslass der Desorptionseinheit für bei hohem Druck desorbiertes CO₂ fluidtechnisch verbundener Kondensatorverdampfer eingesetzt, wobei über eine mit dem Kondensatorverdampfer fluidtechnisch verbundene CO₂-Pumpe das verdichtete CO₂ nach Erwärmung in einem Wärmetauscher abgeleitet wird.

Die beschriebenen Ausgestaltungen der Erfindung sind, soweit im Einzelfall nicht anders beschrieben mit Vorteil miteinander kombinierbar.

Nachfolgend wird die Erfindung beispielhaft an Figuren beschrieben, welche besonders bevorzugte Ausgestaltungen der Erfindung zeigen.

Die nachfolgenden Figuren dienen der Veranschaulichung von Ausführungsformen der Erfindung. Die einzelnen Figuren zeigen:
- Figur 1: eine schematische Darstellung des erfindungsgemäßen Verfahrens in einer ersten Ausführungsform mit gasförmiger CO₂-Verdichtung;
- Figur 2: eine schematische Darstellung des erfindungsgemäßen Verfahrens in einer zweiten Ausführungsform mit CO₂-Verflüssigung;
- Figur 3: eine schematische Darstellung einer erfindungsgemäßen Vorrichtung in einer bevorzugten Ausführungsform in einem BHKW mit gasförmiger CO₂-Verdichtung
- Figur 4: eine schematische Darstellung einer erfindungsgemäßen Vorrichtung in einer weiteren bevorzugten Ausführungsform in einem BHKW mit flüssiger CO₂-Verdichtung

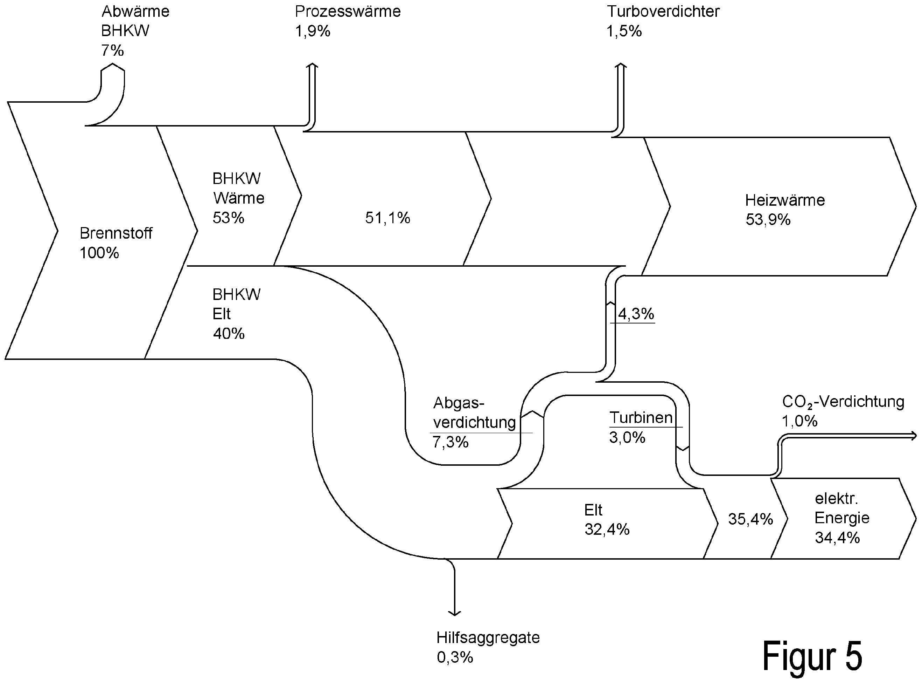

- Figur 5: Energieflussdiagramm des erfindungsgemäßen Verfahrens in der bevorzugten Ausführungsform in einem BHKW

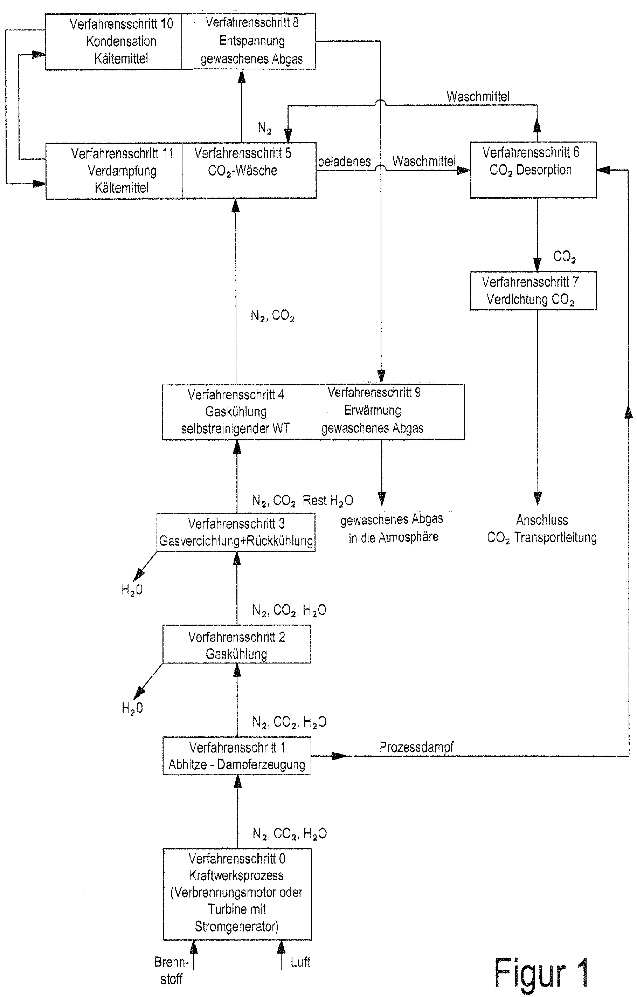

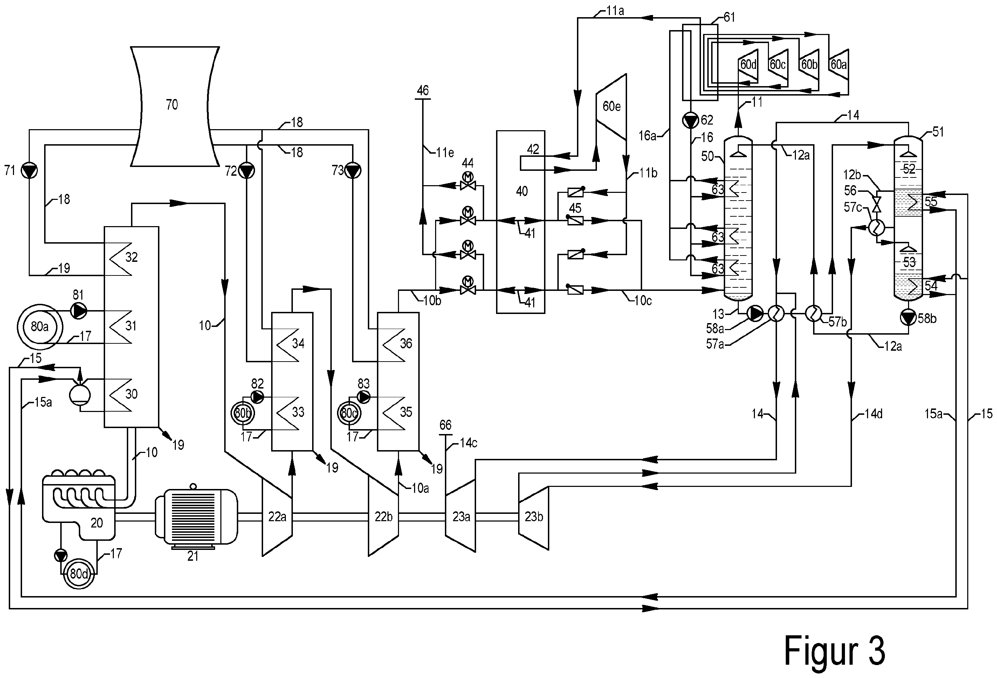

### Beschreibung Variante 1 (Figur 1 und Figur 3)

Die Tieftemperatur-Abgas-CO₂-Abscheidung mit Verdichtung von gasförmigem CO₂ gliedert sich in folgende Verfahrensschritte:

### 0. Vorstufe Kraftwerksprozess

Bei der Elektrizitätserzeugung mit Verbrennungsmotoren oder Gasturbinen verlässt das Abgas 10 den Motor 20 bzw. die Gasturbine bei hohen Temperaturen. Die Abgastemperatur liegt bei Verbrennungsmotoren bevorzugt zwischen 500 und 600 °C, bei Gasturbinen noch höher.

Das heiße Abgas 10 wird bei dem erfindungsgemäßen Verfahren, im Weiteren in der Tieftemperatur-Abgas-CO₂-Abscheidung wie folgt behandelt.

### 1. Verfahrensschritt 1

Im optionalen Verfahrensschritt 1 wird das Abgas 10 in einem Abhitzedampferzeuger 30 für die Produktion von Prozessdampf 15 genutzt.

Der Prozessdampf 15 wird beispielsweise eingesetzt, um im Verfahrensschritt 6 bei der Regeneration des beladenen Lösungsmittels 13, insbesondere Methanols die Lösungswärme zur Desorption des CO₂ aus der beladenen Lösung 13 und zur Desorption des CO₂ aus der teilentlasteten Lösung 12b bereit zu stellen. Wenn die beladene Lösung 13 z. B. bei 12 bar regeneriert werden soll, liegt die Verdampfungstemperatur des Lösungsmittels, insbesondere von Methanol bei 140 °C. Die Regeneration findet unterhalb der Lösungsmittel(Methanol)-Verdampfungstemperatur statt, also in Bezug auf Methanol Prozessdampf ist Sattdampf bei 120 °C und ca. 2 bar geeignet.

### 2. Verfahrensschritt 2

Im ebenfalls optionalen Verfahrensschritt 2 wird das Abgas 10 weiter abgekühlt. Dabei kann die Abgaswärme hinter einem Abhitzedampfkessel bis zur Rücklauftemperatur des Heiznetzes 80a mit Hilfe des Abgaswärmetauschers 31 für die Gebäudebeheizung energetisch genutzt werden.

Die weitere Abkühlung des Abgases im Abgaskühler a 32 erfolgt mit Kühlwasser und ist begrenzt durch die Temperatur des zur Verfügung stehenden Kühlwassers 18, das in der Regel mittels eines Kühlturms 70 gewonnen werden muss. Bei manchen Standorten kann auch Kühlwasser aus dem Meer oder aus Flüssen zur Verfügung stehen. Mit dieser Abgaskühlung lässt sich in Abhängigkeit von Standort und Jahreszeit eine Abkühlung des Abgases auf einen Temperaturbereich zwischen +5 °C und +30 °C erreichen.

Im Verfahrensschritt 2 kondensiert ein großer Teil des im Abgas enthaltenen Wasserdampfs und wird als Kondensat 19 abgeschieden.

### 3. Verfahrensschritt 3

Im Verfahrensschritt 3 wird das gekühlte und getrocknete Abgas 10, bestehend aus N₂, CO₂, Ar und Resten von H₂O in einem ein- oder mehrstufigen Abgasverdichter verdichtet. Die nachfolgende Beschreibung bezieht sich auf eine zweistufige Abgasverdichtung 22a, 22b.

Im Abgasverdichter (22a, 22b) muss die Höhe der Verdichtung so hoch gewählt werden, dass bei Expansion und Erwärmung des gewaschenes Abgases 11 die erforderliche Kälte für die Tieftemperatur-Abgas-CO₂-Abscheidung erzeugt werden kann. Die durchgeführte Berechnung mehrerer Ausführungsbeispiele ergab, dass eine Verdichtung im Bereich von 8 bis 20 bar hierfür ausreichend ist.

Der Energieaufwand für die Abgasverdichtung ist bei einer mehrstufigen Verdichtung mit Zwischenkühlung niedriger, als bei einer einstufigen Verdichtung. Mit der Anzahl der Verdichtungsstufen sinkt der Energieaufwand für die Verdichtung des Abgases. Im Gegenzug ist für die zusätzlichen Verdichtungsstufen ein höherer Investitionsaufwand erforderlich.

Die bei der Verdichtung entstehende Wärme kann bis zur Rücklauftemperatur des Heiznetzes 80b, 80c mit Hilfe der Abgaswärmetauschers 33 und 35 für die Gebäudebeheizung energetisch genutzt werden.

Die weitere Abkühlung des Abgases erfolgt mit Kühlwasser im Abgaskühler b 34 bzw. Im Abgaskühler c 36.

Bei der Abgaskühlung bei höherem Druck kondensiert ein weiterer Teil des im Abgas 10a enthaltenen Wasserdampfs und wird als Kondensat 19 abgeschieden.

### 4. Verfahrensschritt 4

Das verdichtete und zurück gekühlte Abgas 10b wird im Verfahrensschritt 4 auf eine vorbestimmte Temperatur, die insbesondere der Temperatur im CO₂-Absorber 50 entspricht gekühlt.

Das Abgas 10b weist bei Austritt aus dem Abgaskühler 36 als gesättigtes, feuchtes Abgas immer noch einen erheblichen Wassergehalt auf, der bei 25°C und 8 bar ca. 2,40 g pro kg Gas beträgt.

Bei der Abkühlung des Abgases 10b unter den Gefrierpunkt von Wasser kondensiert bzw. friert der im Abgas 10b enthaltene Wasserdampf aus. Ohne Trocknung des Abgases oder Reinigungsmaßnahmen würde der Wärmetauscher 40 im Verfahrensschritt 4 verstopfen. Um dieses Verstopfen des Wärmetauschers zu vermeiden, sind selbstreinigende Wärmetauscher-Bauarten zur Kühlung des Abgases bevorzugt.

In den selbstreinigenden Wärmetauscherkomponenten 41 wird durch periodisches Umschalten der Strömung mit den Motorklappen 44 und den Rückschlagklappen 45 das bei der Abgaskühlung an den Wänden des Wärmetauschers abgelagerte Eis und das kondensierte Wasser von dem in die Atmosphäre abgeleiteten gewaschenen Abgas 11b aufgenommen und der Wärmetauscher so wieder gereinigt.

Selbstreinigende Wärmetauscher sind bekannte Bauelemente aus Luftzerlegungsanlagen. Grundsätzlich sind für die Tieftemperatur-Abgas-CO₂-Abscheidung alle aus den Luftzerlegungsanlagen bekannten Bauarten der selbstreinigenden Wärmetauscher geeignet, wie z.B. Kreuzstromgegenströmer, steingefüllte Regeneratoren mit eingebauten Rohrschlangen oder Rekuperatoren in Kompaktbauweise (vielfach als reversing exchangers bezeichnet).

Im Mehrkomponentenwärmetauscher 40 müssen aus dem Abgas 10b folgende Wärmemengen abgeführt werden:
- die Enthalpiedifferenz des Abgases 10b zwischen der Austrittstemperatur aus dem letzten Abgaskühler 36 und der Verfahrenstemperatur der CO₂-Absorptionssäule 50 und
- die Verdampfungsenthalpie des kondensierenden Wasserdampfanteils.

Die für den Mehrkomponentenwärmetauscher 40 erforderliche Kälte wird bereitgestellt
- durch die Erwärmung des gewaschenes Abgases 11a in der Wärmetauscherkomponente 42 und
- durch die nachfolgende Expansion des gewaschenes Abgases 11a in der Entspannungsturbine e 60e und Erwärmung des aus der Turbine austretenden kalten gewaschenen Abgases 11b in die selbstreinigende Wärmetauscherkomponente 41

Bei der Erwärmung des gewaschenen Abgases in der selbstreinigenden Wärmetauscherkomponente 41 nimmt das gewaschene Abgas das bei Abkühlung auskondensierte bzw. ausgefrorene Wasser auf und das feuchte gewaschene Abgas 11c wird über den Auslass für gewaschenes Abgas 46 in die Atmosphäre abgeleitet.

### 5. Verfahrensschritt 5

Im Verfahrensschritt 5 wird das im Mehrkomponentenwärmetauscher 40 gekühlte Abgas 10c in die Absorptionssäule 50 eingeführt. In der Absorptionsäule 50 wird das im Abgas befindliche CO₂ in einer Gaswäsche mittels Inkontaktbringen des Abgasstroms mit einem CO₂-absorbierenden Lösungsmittels, insbesondere Methanol physikalisch absorbiert. Bei der Verfahrenstemperatur in der Absorptionssäule wirkt das CO₂-absorbierende Lösungsmittel, insbesondere Methanol als selektives Lösungsmittel für CO₂. Durch das weitgehende Regenerieren des Lösungsmittels im Verfahrensschritt 6 kann das CO₂ bis auf geringe Restanteile aus dem Gasstrom ausgewaschen werden.

Die Absorption des CO₂ erfolgt isotherm, d. h. die Lösungswärme des CO₂ muss abgeführt werden. Um dies zu erreichen, sind in die Absorptionssäule 50 Kältemittelverdampfer 63 eingebaut.

Am Kopf der Absorptionssäule 50 wird das gewaschene Abgas 11, ein Gasgemisch aus Stickstoff, Sauerstoff (bei Verbrennung mit Luftüberschuss), dem Restanteil CO₂ und dem aus der Verbrennungsluft stammenden Anteil Argon entnommen.

Sumpfseitig wird aus der Absorptionssäule 50 das mit CO₂ beladene Methanol 13 entnommen und dem Verfahrensschritt 6, der CO₂-Desorption, zugeführt.

### 6. Verfahrensschritt 6

Im Verfahrensschritt 6 wird das mit CO₂ beladene Lösungsmittel 13 mit der Lösungsmittel-Pumpe a 58a der Desorptionssäule 51 zugeführt. Vor Eintritt in die Desorptionssäule 51 wird das mit CO₂ beladene Lösungsmittel in 2 Wärmetauschern
- dem Lösungsmittel-Wärmetauscher a 57a durch Wärmeübertragung der Enthalpie des desorbierten CO₂ 14 und
- dem Lösungsmittel-Wärmetauscher b 57b durch Wärmeübertragung der Enthalpie des regenerierten Lösungsmittels 12a
erwärmt.

Die Desorptionssäule 51 ist 2-stufig aufgebaut,
- der Druckstufe der CO₂-Desorptionssäule 52 und
- der Niederdruckstufe der CO₂-Desorptionssäule 53.

In der Druckstufe der CO₂-Desorptionssäule 52 wird das Lösungsmittel/CO₂ Gemisch 13 bei dem Verfahrensdruck der Absorptionssäule 50 bis maximal zur Siedetemperatur des Lösungsmittels erwärmt. Durch die Temperaturerhöhung sinkt die Löslichkeit des CO₂ im Lösungsmittel und der größte Teil des absorbierten CO₂s wird unter Zufuhr der Lösungswärme freigesetzt. Das CO₂ 14 verlässt die Druckstufe 52 der Desorptionssäule 51 kopfseitig.

Das teilentlastete Lösungsmittel 12b sammelt sich im Sumpf der Druckstufe der CO₂-Desorptionssäule 52. Von dort wird das teilentlastete Lösungsmittel 12b über ein Drosselventil 56 und den Lösungsmittel-Wärmetauscher c 57c in die Niederdruckstufe der CO₂-Desorptionssäule 53 geleitet. Durch die Druckabsenkung wird die Löslichkeit des CO₂ im Lösungsmittel weiter abgesenkt und ein zusätzlicher Teil des absorbierten CO₂s wird unter Zufuhr der Lösungswärme freigesetzt.

Die Lösungswärme für die Desorption des CO₂ wird in der der Druckstufe der CO₂-Desorptionssäule 52 und in der Niederdruckstufe der CO₂-Desorptionssäule 53 bevorzugt aus der Abgaswärme des Kraftwerksprozesses gemäß Verfahrensschritt 1 bereitgestellt.

### 7. Verfahrensschritt 7

Im Verfahrensschritt 7 wird das desorbierte CO₂ 14a aus der Niederdruckstufe der CO₂-Desorptionssäule 53 im CO₂-Verdichter 23b auf den Druck der Druckstufe verdichtet und mit dem desorbierten CO₂ 14 aus der Druckstufe der CO₂-Desorptionssäule 52 zusammengeführt.

Das zusammengeführte CO₂ 14 wird durch Wärmeübertragung auf das mit CO₂ beladene Lösungsmittel 13 im Lösungsmittel-Wärmetauscher a 57a abgekühlt. Nachfolgend wird das CO₂ 14 in einem Gasverdichter auf den für die unterirdische Lagerung bzw. eine stoffliche Verwertung erforderlichen Druck verdichtet und das verdichtete CO₂ 14c wird am Anschlusspunkt 66 aus dem Verfahren geleitet.

### 8. Verfahrensschritt 8

Im Verfahrensschritt 8 wird das am Kopf des CO₂-Absorbers, insbesondere der Absorptionssäule entnommene gewaschene Abgas 11 in Entspannungsturbinen 60a, 60b ... Arbeit leistend entspannt. Mit dieser Expansion des gewaschenen Abgases 11 wird die im Kältemittelkondensator 61 benötigte Kälte bereitgestellt.

In Abhängigkeit vom in den Verfahrensschritten 10 und 11 eingesetzten Kältemittel sind Temperaturgrenzen zu beachten, unter die die Austrittstemperatur aus den Entspannungsturbinen 60a, 60b ... nicht absinken darf. Wird z. B. als Kältemittel 16 Ammoniak eingesetzt, darf die Temperatur des Ammoniakschmelzpunktes von 195 °K nicht unterschritten werden, wodurch im Berechnungsbeispiel eine 4-stufige Entspannung benötigt wird.

### 9. Verfahrensschritt 9

Im Verfahrensschritt 9 wird das gewaschene Abgas 11a in der Wärmetauscherkomponente 42 zur Deckung eines Teils des Kältebedarfs im Mehrkomponentenwärmetauscher 40 genutzt. Zur Deckung des restlichen Teils des Kältebedarfs im Mehrkomponentenwärmetauscher 40 wird das gewaschene Abgas 11a in der Turbine 60e expandiert und damit abgekühlt. Mit der nachfolgenden Erwärmung in der selbstreinigenden Wärmetauscherkomponente 41 nimmt das gewaschene Abgas 11b das in Verfahrensschritt 4 auskondensierte bzw. ausgefrorene H₂O auf. Danach wird das feuchte gewaschene Abgas 11c über den N₂-Auslass 46 in die Atmosphäre abgeleitet.

### 10. Verfahrensschritt 10

Im Verfahrensschritt 10 wird im Kältemittelkondensator 61 die Kälte des expandierten gewaschenen Abgases 11 des Verfahrensschritts 8 für die Kondensation des Kältemittels 16a genutzt.

### 11. Verfahrensschritt 11

Im Verfahrensschritt 11 wird zur Abfuhr der Lösungswärme, die bei der Absorption des CO₂ im Lösungsmittel, insbesondere Methanol entsteht, das flüssige Kältemittel 16 aus Verfahrensschritt 10 in den in die Absorptionssäule 50 eingebauten Kältemittelverdampfern 63 verdampft.

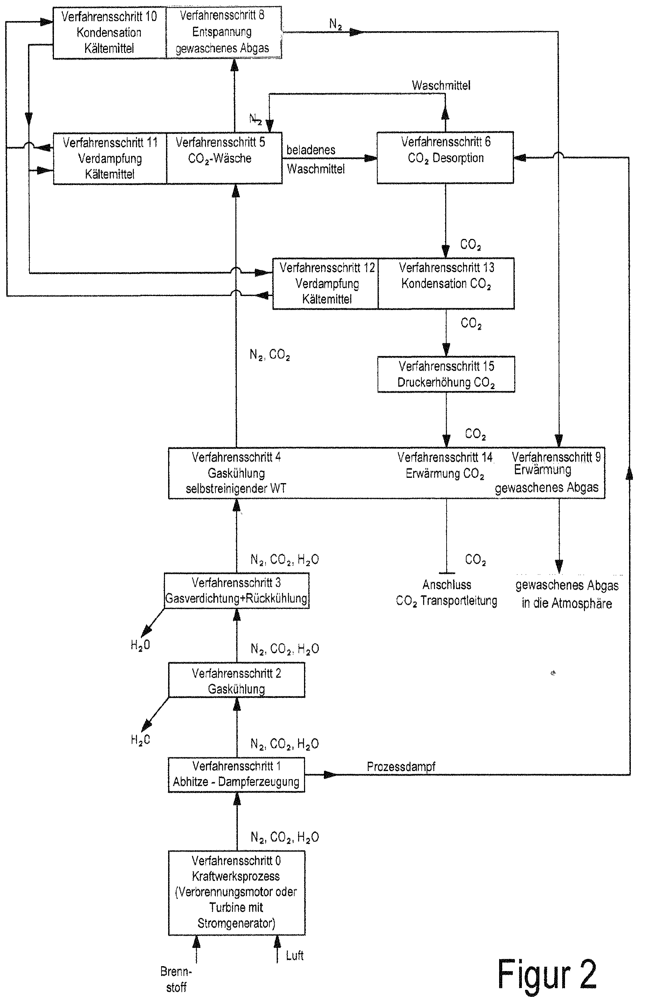

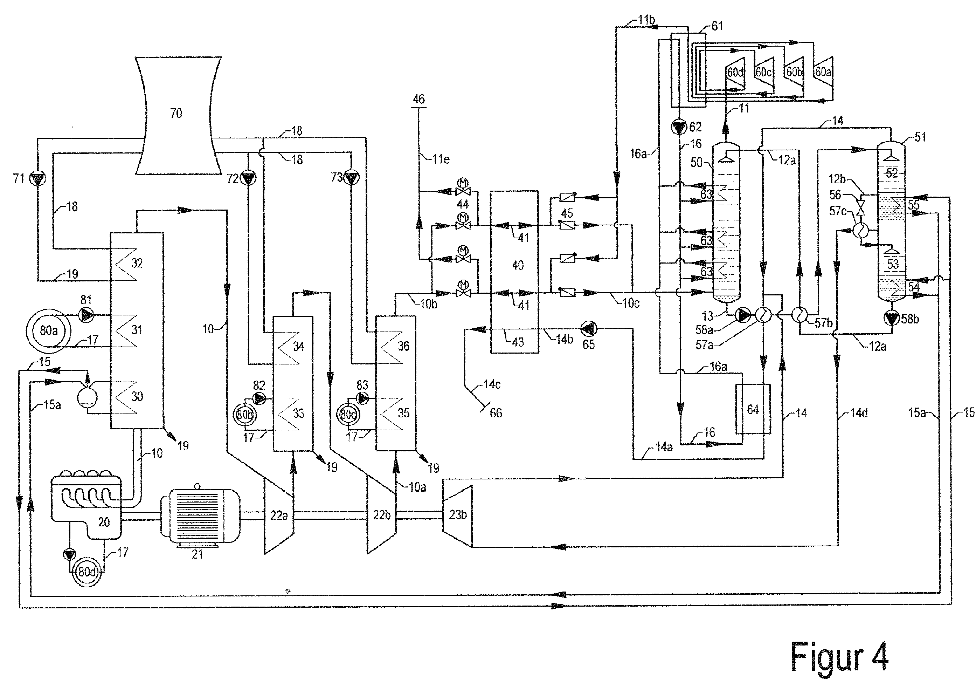

### Beschreibung Variante 2 (Figuren 2 und 4)

### Verfahrensaufbau

Der Verfahrensaufbau der Variante 2 Tieftemperatur-Abgas-CO₂-Abscheidung entspricht in vielen Verfahrensschritten dem Verfahrensaufbau der Variante 1. Der wesentliche Unterschied besteht darin,
- dass in der Variante 1 das in Verfahrensschritt 6 desorbierte CO₂ im Verfahrensschritt 7 gasförmig verdichtet wird
- während in der Variante 2 das in Verfahrensschritt 6 desorbierte CO₂ zunächst im Verfahrensschritt 12 verflüssigt wird und nachfolgend im Verfahrensschritt 13 in flüssigem Zustand verdichtet wird. Zwar hat die Variante 2 einen höheren Kältebedarf durch die CO₂-Kondensation aber die Verdichtung des CO₂ in flüssigen Zustand erfordert nur einen Bruchteil der Verdichterarbeit des gasförmigen CO₂, was sich vor allem bei höheren Drücken der CO₂-Einlagerung in tiefen Lagerstätten günstig auswirkt.

Welche der beiden Varianten günstiger ist, ist vom jeweiligen Anwendungsfall abhängig.

Die Tieftemperatur-Abgas-CO₂-Abscheidung mit Verdichtung von flüssigem CO₂ gliedert sich in folgende Verfahrensschritte:

### 1. Verfahrensschritte 1 bis 6

In der Variante 2 erfolgt Behandlung des Abgases in den Verfahrensschritten 1 bis 6 genau wie in der Variante 1, mit dem Unterschied, dass in Variante 2 im Verfahrensschritt 3 das Abgas auf einen höheren Druck verdichtet werden muss.

### 2. Verfahrensschritt 8

Im Verfahrensschritt 8 wird in der Variante 2 das am Kopf der Absorptionssäule 50 entnommene gewaschene Abgas 11 wie in der Variante 1 in den Entspannungsturbinen 60a, 60b ... mehrstufig Arbeit leistend entspannt. Wegen des höheren Drucks des gewaschenen Abgases 11 steht in Variante 2 mit der Entspannung des gewaschenen Abgases 11 in den Turbinen 60a, 60b ... mehr Kälte für die Kondensation einer größeren Menge Kältemittel 16a im Kältemittelkondensator 61 zur Verfügung.

### 3. Verfahrensschritt 9

Im Verfahrensschritt 9 wird im Mehrkomponenten-Wärmetauscher 40 in der Variante 2 weniger Kälte aus der Erwärmung und Expansion des gewaschenen Abgases 11 benötigt, da ein Teil des Kältebedarfs durch Erwärmung des CO₂ 14b in der Wärmetauscherkomponente 43 bereitgestellt wird.

### 4. Verfahrensschritt 13

In der Verfahrensvariante 2 wird im Verfahrensschritt 13 das im Verfahrensschritt 7 desorbierte CO₂ 13 nach der Kühlung im Lösungsmittel-Wärmetauscher c 57c im CO₂-Kondensatorverdampfer 64 verflüssigt.

Kondensatorverdampfer sind in der Tieftemperaturtechnik für andere Zwecke bekannte Bauteile. In den Zweisäulenapparaten zur Luftzerlegung wird z. B. ein Kondensatorverdampfer für die Kondensation von Stickstoff bei hohem Druck durch bei niedrigem Druck siedenden Sauerstoff eingesetzt.

Der Einsatz von Kondensatorverdampfern für die CO₂-Verflüssigung ist eine neue, bisher nicht genutzte Technik.

So kann z. B. für die CO₂-Verflüssigung bei einem CO₂-Partialdruck von 12 bar und einer CO₂-Kondensationstemperatur von 238 °K der CO₂-Kondensatorverdampfer 64 mit siedendem Ammoniak als Kältemittel bei 0,8 bar und 235 °K betrieben werden.

### 5. Verfahrensschritt 14

Im Verfahrensschritt 14 wird das flüssige CO₂ 14a mit der CO₂-Hochdruckpumpe 65 auf den für die unterirdische Lagerung erforderlichen überkritischen Druck verdichtet und anschließend in die Wärmetauscherkomponente 43 geleitet.

Energietechnisch ist die Verdichtung eines Stoffes in flüssigem Zustand besonders vorteilhaft, da der im flüssigen Zustand erforderliche Energieaufwand für die Verdichtung von Flüssigkeiten verglichen mit der Verdichtung von Gasen um ein vielfaches kleiner ist. Wie weit verdichtet werden muss, ist von dem Druck abhängig, der zur Einlagerung in der jeweiligen Lagerstätte benötigt wird.

### 6. Verfahrensschritt 15

Im Verfahrensschritt 15 wird das flüssig verdichtete CO₂ 14b in der Wärmetauscherkomponente 43 auf Umgebungstemperatur erwärmt. Nach der Erwärmung in der Wärmetauscherkomponente 43 wird das hoch verdichtete CO₂ 14b am Anschlusspunkt 66 aus der Tieftemperatur-Abgas-CO₂-Abscheidung entnommen.

### Berechnungsbeispiel

Als Berechnungsbeispiel für die Tieftemperatur-Abgas-CO₂-Abscheidung dient ein Blockheizkraftwerk mit einem Lamda1-Motor mit dem Brennstoff Erdgas H und ohne Abgas-CO2-Abscheidung 1.000 kW elektrischer Leistung, einem elektrischen Wirkungsgrad von 40 % und einem Wirkungsgrad des BHKW bei der Wärmeerzeugung von 50%.

In diesem Berechnungsbeispiel wird dargestellt, wie sich die Leistung und die Wirkungsgrade dieses BHKW bei Einsatz des erfindungsgemäßen Verfahrens der Tieftemperatur-Abgas-CO₂-Abscheidung nach Variante 1 verändern.

Bei der Berechnung wird zu Grunde gelegt, dass die Verdichter und der BHKW-Motor auf einer Welle - wie in den Figuren 3 und 4 dargestellt - angeordnet werden. Die Berechnung erfolgt beispielhaft mit folgenden Annahmen:
- Da das Abgas des Lamda1-Motors keinen Sauerstoff enthält, wird vereinfachend angesetzt, dass das gewaschene Abgas ausschließlich aus Stickstoff besteht (bei Vernachlässigung des Argonanteils und der CO₂-Reste)
- Verdichtung des CO₂ auf 100 bar
- Eintrittstemperatur Abgas in den selbstreinigenden Wärmetauscher 298 °K
- Austrittstemperatur Abgas aus dem selbstreinigenden Wärmetauscher 220 °K
- Absorption CO₂ bei 222 °K und 8 bar
- Verwendetes Kältemittel Ammoniak
- Kondensation NH₃ bei 220 °K
- Verdampfung NH₃ bei 220 °K
- Eintrittstemperatur N₂ in den Kältemittelkondensator >195 °K (Schmelzpunkt für NH₃)
- Austrittstemperatur N₂ aus dem Kältemittelkondensator 218 °K (Δt = 2 °K)

### 1. Zusammenstellungen

### 1.1 Energiebilanz mit Tieftemperatur-Abgas-CO₂-Abscheigung

| | | | |
|---|---|---|---|
| Brennstoffeinsatz | 2.500 kW | 100,0000% | |
| Elektrische Leistung ohne Abgas-CO₂-Abscheidung | 1.000 kW | 40,0000% | |
| Abgasverdichter 1. Stufe | -91 kW | -3,6436% | Berechnung 2.3 |
| Abgasverdichter 2. Stufe | -92 kW | -3,6671 % | Berechnung 2.4 |
| CO₂-Verdichter 1 | -21 kW | -0,8326% | Berechnung 2.5 |
| CO₂-Verdichter 2 | -4 kW | -0,1781% | Berechnung 2.6 |
| Hilfsaggregate (Pumpen, Kühlturm etc. geschätzt) | -5 kW | -0,2000% | |
| Gasturbine a | 15 kW | 0,5983% | Berechnung 2.7 |
| Gasturbine b | 14 kW | 0,5475% | Berechnung 2.8 |
| Gasturbine c | 14 kW | 0,5787% | Berechnung 2.9 |
| Gasturbine d | 11 kW | 0,4236% | Berechnung 2.10 |
| Gasturbine e | 20 kW | 0,8093% | Berechnung 2.11 |
| Elektrische Leistung mit Abgas-CO2-Abscheidung | 861 kW | 34,4361% | |
| | | | |
| Wärmeleistung ohne Abgas-CO₂-Abscheidung | 1.250 kW | 50,0000% | |
| Nutzung für Prozesswärme | -46 kW | | Berechnung 2.25 |
| nutzbare Kompressionswärme AbgasVerdichter 1 | 71 kW | | Berechnung 2.3 |
| nutzbare Kompressionswärme AbgasVerdichter 2 | 72 kW | | Berechnung 2.4 |
| Wärmeleistung mit Abgas-CO2-Abscheidung | 1.347 kW | 53,8786% | |

### Gesamtwirkungsgrad BHKW ohne Abgas-CO₂-Abscheidung

| | | |
|---|---|---|
| Elektrische Leistung ohne Abgas-CO₂-Abscheidung | 1.000 kW | 40,00% |
| Wärmeleistung ohne Abgas-CO2-Abscheidung | 1.250 kW | 50,00% |
| Gesamtwirkungsgrad BHKW ohne Abgas-CO2-Abscheidung | | 90,00% |

| Gesamtwirkungsgrad BHKW mit Abgas-CO₂-Abscheidung | | |
|---|---|---|
| Elektrische Leistung mit Abgas-CO₂-Abscheidung | 861 kW | 34,44% |
| Wärmeleistung mit Abgas-CO2-Abscheidung | 1.347 kW | 53,88% |
| Gesamtwirkungsgrad BHKW mit Abgas-CO2-Abscheidung | | 88,31% |

### 1.2 Bilanz des Kältemittelkreises

| - | Kältebedarf | Kälteleistung | |
|---|---|---|---|
| Kältemittelverdampfung in der Waschsäule | 47 kW | | Berechnung 2.12 |
| Verluste Kältemittelkreis geschätzt | 3 kW | | |
| Erwärmung des N₂-Gemischs aus Turbine a | | 14 kW | Berechnung 2.13 |
| Erwärmung des N₂-Gemischs aus Turbine b | | 14 kW | Berechnung 2.14 |
| Erwärmung des N₂-Gemischs aus Turbine c | | 14 kW | Berechnung 2.15 |
| Erwärmung des N₂-Gemischs aus Turbine d | | 11 kW | Berechnung 2.16 |
| | 50 kW | 52 kW | |

### 1.3 Bilanz des selbstreinigenden Wärmetauschers

| - | Kältebedarf | Kälteleistung | |
|---|---|---|---|
| Abkühlung des Abgases | 61 kW | | Berechnung 2.17 |
| Verluste selbstreinigende WT geschätzt | 3 kW | | |
| Kondensation H₂O im selbstreinigenden WT | 5 kW | | Berechnung 2.18 |
| Kälte aus N₂- Erwärmung bei 1,7 bar | | 18 kW | Berechnung 2.19 |
| Kälte aus N₂- Erwärmung bei 1,0 bar | | 52 kW | Berechnung 2.20 |
| | 69 kW | 70 kW | |

### 2. Berechnungen

### 2.1. Berechnung a - Ermittlung Abgasmassenstrom und Abgaszusammensetzung

| Zusammensetzung trockene reine Luft | - | | |
|---|---|---|---|
| O₂ | | 0,209 m³/m³ | |
| N₂ | | 0,781 m³/m³ | |
| Ar | | 0,009 m³/m³ | |
| - | | 1,000 m³/m³ | |

| Brennstoff Erdgas H | Molekularvolumen Nm³/Kmol | Molekular-gewicht kg/Nm³ | Anteile |
|---|---|---|---|
| Menge CH₄ | 22,38 | 16,00 | 93% |
| Menge C₂H₆ | 22,24 | 28,00 | 3% |
| Menge C₃H₈ | 22,24 | 28,00 | 2% |
| Menge CO₂ | 22,26 | 44,00 | 1% |
| Menge O₂ | 22,39 | 32,00 | |
| Menge S | 22,41 | 32,00 | |
| Menge N₂ | 22,40 | 28,00 | 1% |
| Menge H₂O | 22,40 | 18,00 | |
| Argon | 22,39 | 40,00 | |

| gesamt | | | 100% |
|---|---|---|---|
| Brennstoffmenge | | 0,067 Nm³/s | 241 Nm³/h |
| Menge O₂ₘᵢₙ = 2*CH₄+3,5*C₂H₆+5*C₃H₈ | 2,050 m³/m³ | 0,137 Nm³/s | 0,196 kg/s |
| Heizwert Hᵤ in kJ/Nm³ | | 37.300 | |
| Heizwert Hᵤ in kWh/Nm³ | | 10,36 | 2.499 kW |
| elektrischer Wirkungsgrad | 40% | | |
| elektrische Leistung | | | 1.000 kW |
| Abgas | | | |
| Menge CO₂ | 1,050 m³/m³ | 0,071 Nm³/s | 0,140 kg/s |
| Menge H₂O aus Verbrennung | 2,030 m³/m³ | 0,136 Nm³/s | 0,194 kg/s |
| Menge N₂ | | 0,513 Nm³/s | 0,641 kg/s |
| Menge Ar | | 0,006 Nm³/s | 0,011 kg/s |
| Abgas gesamt | | 0,726 Nm³/s | 0,986 kg/s |
| davon trockenes Abgas | 2.123 Nm³/h | 0,590 Nm³/s | 0,792 kg/s |

### 2.2. Berechnung b - Ermittlung der Isentropenexponenten für die Gasgemische

| Ermittlung des Isentropenexponenten für das Abgas (N₂/CO₂/Ar) | | |
|---|---|---|
| m_{N2} | | 0,641 kg/s |
| m_{CO2} | | 0,140 kg/s |
| m_{Ar} | | 0,011 kg/s |
| m_{Ges} = m_{N2} + m_{CO2} + m_{Ar} | | 0,792 kg/s |
| spez. Wärmekapazität N₂ | c_{p N2} | 1,041 kJ/kgK |
| spez. Wärmekapazität N₂ | C_{v N2} | 0,744 kJ/kgK |
| spez. Wärmekapazität CO₂ | c_{p CO2} | 0,822 kJ/kgK |
| spez. Wärmekapazität Ar | c_{v CO2} | 0,637 kJ/kgK |
| | c_{p Ar} | 0,519 kJ/kgK |
| | c_{v Ar} | 0,309 kJ/kgK |
| Isentropenexponent von N₂ | K | 1,4 |
| Isentropenexponent von CO₂ | K | 1,29 |
| Isentropenexponent von Ar | K | 1,67 |
| c_{p, Ges} = m_{N2} / m_{Ges} * c_{p N2} + m_{CO2} / m_{Ges} * cp _{CO2} + m_{AR} / m_{Ges *} cp _{Ar} | | 0,994975 |
| c_{v, Ges} = m_{N2}/ m_{Ges} * c_{v N2} + m_{CO2} / m_{Ges} * c_{v CO2} + m_{AR} / m_{Ges} * c_{p Ar} | | 0,718719 |
| K_{Ges} | | 1,384372 |

| Ermittlung des Isentropenexponenten für das Stickstoffgemisch | | |
|---|---|---|
| m_{N2/Ar} = m_{N2} + mₐᵣ | 0,652 kg/s | |
| c_{p, Ges} = m_{N2/} m_{Ges} * c_{p N2} + m_{AR /} m_{Ges *} cp _{Ar} | 1,032242 | |
| cᵥ, _{Ges} = m_{N2}/ m_{Ges} * c_{v N2} + m_{AR} / m_{Ges *} c_{p Ar} | 0,736280 | |
| K_{N2/Ar} | 1,401969 | |

### 2.3 Berechnung des Abgasverdichters 1. Stufe

| | | |
|---|---|---|
| Temperarur der Gaseintritt | tₗ | 25 °C |
| Druck der Umbegung | p₁ | 1,00 bar |
| Druck nach Verdichter | p₂ | 2,85 bar |
| isentroper Verdichterwirkungsgrad | η _{i,VD} | 87,00% |
| Isentropenexponent Abgas | K | 1,384372 |
| | | |

| Enthalpie Abgas am Eintritt Verdichter | | |
|---|---|---|
| h₁ = c_{p Ges} * t₁ | | 24,87 kJ/kg |

| Enthalpie Abgas am Austritt Verdichter | | |
|---|---|---|
| h_{VD} = h₁ +1/η _{i,VD *}C_{p Ges *}(t_{TVD} + 273) * [(p2/p1)(^{K- 1)/K}-1] | | 139,9 kJ/kg |

| Austrittstemperatur aus dem Turboverdicher | | |
|---|---|---|
| t₂ | | |
| t_{VD} = h_{VD} / cₚ | | 141 °C |
| Leistung Abgasverdichter 1 | | 91 kW |
| Heiznutzung von 141°C auf 50°C | | 71 kW |

### 2.4 Berechnung des Abgasverdichters - 2. Stufe

| | | |
|---|---|---|
| Temperarur der Gaseintritt | tₗ | 25 °C |
| Druck aus Stufe 1 | p₁ | 2,85 bar |
| Druck nach Turboverdichter | p₂ | 8,00 bar |
| isentroper Verdichterwirkungsgrad | η _{i,TVD} | 85,00% |
| Isentropenexponent Abgas | K | 1,384372 |
| | | |

| Enthalpie Abgas am Eintritt Turboverdichter | | |
|---|---|---|
| h₁ = c_{p Ges} * t₁ | | 24,87 kJ/kg |

| Enthalpie Abgas am Austritt Turboverdichter | | |
|---|---|---|
| h_{TVD} = h₁ +1/η _{i,VD *}c_{p Ges *} (t_{TVD} + 273) * [(p²/p¹)^{(K-1)/K}-1] | | 140,6 kJ/kg |

| Austrittstemperatur aus dem Turboverdicher | | |
|---|---|---|
| t₂ | | |
| t_{TVD} = h_{TVD}/ cₚ | | 141 °C |
| Leistung Abgasverdichter 1 | | 92 kW |
| Heiznutzung von 141°C auf 50°C | | 72 kW |

### 2.5 Berechnung des CO₂-Verdichters a von 8 bar auf 100 bar

| | | |
|---|---|---|
| Temperarur CO₂ | Tₗ | 227 °K |
| Eintrittsdruck | p₁ | 8 bar |
| Austrittsdruck | p₂ | 100,00 bar |
| isentroper Verdichterwirkungsgrad | η _{i,P} | 87,00% |
| Masse CO₂ | | 0,1404 kg/s |
| | | |

| Enthalpie CO₂ am Eintritt Verdichter | | |
|---|---|---|
| h₁ = Tabellenwert 227 °K, 8 bar | | 147,00 kJ/kg |
| s₁ = Tabellenwert 227 °K, 8 bar | | 4,214 kJ/kg |

| Enthalpie CO₂ am Austritt Verdichters | | |
|---|---|---|
| h₂ = Tabellenwert 422 °K, 100 bar | 276,00 kJ/kg | |
| s₂ = Tabellenwert 422 °K, 100 bar | 4,214 kJ/kg | |
| adiabate Verdichtung | 18,11 kW | |
| Leistung CO₂-Verdichter (isentrop) | 20,82 kW | |
| | | |

### 2.6 Berechnung des CO₂-Verdichters b von 1 bar auf 8 bar

| | | |
|---|---|---|
| Temperarur CO₂ | Tₗ | 273 °K |
| Eintrittsdruck | p₁ | 1 bar |
| Austrittsdruck | p₂ | 8,00 bar |
| isentroper Verdichterwirkungsgrad | η _{i,P} | 87,00% |
| Masse CO₂ | | 0,0289 kg/s |
| | | |

| Enthalpie CO₂ am Eintritt Verdichter | | |
|---|---|---|
| h₁ = Tabellenwert 273 °K, 1 bar | | 191,10 kJ/kg |
| s₁ = Tabellenwert 273 °K, 1 bar | | 4,786 kJ/kg |

| Enthalpie CO₂ am Austritt Verdichters | | |
|---|---|---|
| h₁ = Tabellenwert 425 °K, 8 bar | | 325,00 kJ/kg |
| s₁ = Tabellenwert 425 °K, 8 bar | | 4,786 kJ/kg |
| adiabate Verdichtung | | 3,87 kW |
| Leistung CO₂-Verdichter (isentrop) | | 4,45 kW |

### 2.7 Berechnung der Gasturbine a

| | | |
|---|---|---|
| Temperarur Gaseintritt | T₃ | 220 °K |
| Druck vor Turbine | p₃ | 8,00 bar |
| Druck nach Turbine | p₄ | 5,20 bar |
| isentroper Turbinenwirkungsgrad | η _{i,T,} | 87,00% |
| c_{p, Ges} = m_{N2}/ m_{Ges} * c_{p N2} + m_{AR /} m_{Ges *} cp _{Ar} | | 1,032 kJ/kgK |
| Isentropenexponent für Gemisch b (N₂/Ar ) | K_{N2/Ar} | 1,401969 |

| Enthalpie N₂ am Eintritt Turbine | | |
|---|---|---|
| h₃ = c_{pN2} * t₃ | | 227,09 kJ/kg |

| Enthalpie N₂ am Austritt Turbine | | |
|---|---|---|
| h_{Tt} = h₃ -η _{i,T *}c_{pn" *} T3 * [1-(p4/p3)^{(K-1)/K}-1] | | 204,1 kJ/kg |

| Austrittstemperatur aus der Turbine t₂ | | |
|---|---|---|
| T₄ = h_{TVD} / c_{pN2/Ar} | | 198 °K |
| Massenstrom N₂ + Ar | | 0,65 kg/s |
| Leistung Turbine | | -14,96 kW |

### 2.8 Berechnung der Gasturbine b

| | | |
|---|---|---|
| Temperarur Gaseintritt | T₃ | 218 °K |
| Druck vor Turbine | p₃ | 5,20 bar |
| Druck nach Turbine | p₄ | 3,50 bar |
| isentroper Turbinenwirkungsgrad | η_{i,T,} | 87,00% |
| C_{p, Ges} = m_{N2} m_{Ges} * c_{p N2} + m_{AR /} m_{Ges *} Cp _{Ar} | | 1,032 kJ/kgK |
| Isentropenexponent für Gemisch b (N₂/Ar ) | K_{N2/Ar} | 1,401969 |
| Enthalpie N₂ am Eintritt Turbine | | |
| h₃ = c_{pN2} * t₃ | | 225,03 kJ/kg |
| Enthalpie N₂ am Austritt Turbine | | |
| h_{Tt} = h₃ -η _{i,T *}c_{pN2Ar" *} T3 * [1-(p4/p3)^{(K-1)/K}-1] | | 204,0 kJ/kg |
| Austrittstemperatur aus der Turbine t₂ | | |
| T₄ = h_{TVD} / C_{pN2/Ar} | | 198 °K |
| Massenstrom N₂ + Ar | | 0,65 kg/s |
| Leistung Gasturbine b | -14 kW | |

### 2.9 Berechnung der Gasturbine c

| | | |
|---|---|---|
| Temperarur Gaseintritt | T₃ | 218 °K |
| Druck vor Turbine | p₃ | 3,50 bar |
| Druck nach Turbine | p₄ | 2,30 bar |
| isentroper Turbinenwirkungsgrad | η_{i,T,} | 87,00% |
| Cp, Ges = m_{N2}/ m_{Ges} * c_{p N2} + m_{AR /} m_{Ges *} cp _{Ar} | | 1,032 kJ/kgK |
| Isentropenexponent für Gemisch b (N₂/Ar ) | K_{N2/Ar} | 1,401969 |
| Enthalpie N₂ am Eintritt Turbine | | |
| h₃ = c_{pN2} * t₃ | | 225,03 kJ/kg |
| Enthalpie N₂ am Austritt Turbine | | |
| h_{Tt} = h₃ -η _{i,T *}c_{pN2Ar" *} T3 * [1-(p4/p3)^{(K-1)/K}-1] | | 202,8 kJ/kg |
| Austrittstemperatur aus der Turbine t₂ | | |
| T₄ = h_{TVD} / c_{pN2/Ar} | | 196 °K |
| Massenstrom N₂ + Ar | | 0,65 kg/s |
| Leistung Gasturbine c | | -14 kW |

### 2.10 Berechnung der Gasturbine d

| | | |
|---|---|---|
| Temperarur Gaseintritt | T₃ | 218 °K |
| Druck vor Turbine | p₃ | 2,30 bar |
| Druck nach Turbine | p ₄ | 1,70 bar |
| isentroper Turbinenwirkungsgrad | η_{i,T,} | 87,00% |
| c_{p, Ges} = m_{N2} / m_{Ges} * c_{p N2} + m_{AR/} m_{Ges *} cp _{Ar} | | 1,032 kJ/kgK |
| Isentropenexponent für Gemisch b (N₂/Ar ) | K_{N2/Ar} | 1,401969 |
| Enthalpie N₂ am Eintritt Turbine | | |
| h₃ = c_{pN2} * t₃ | | 225,03 kJ/kg |
| Enthalpie N₂ am Austritt Turbine | | |
| h_{Tt} = h₃ -η _{i,T*}c_{pN2Ar" *} T3 * [1-(p4/p3)^{(K-1)/K}-1] | | 208,8 kJ/kg |
| Austrittstemperatur aus der Turbine t₂ | | |
| T₄ = h_{TVD} / c_{pN2/Ar} | | 202 °K |
| Massenstrom N₂ + Ar | | 0,65 kg/s |
| Leistung Gasturbine d | | -11 kW |

### 2.11 Berechnung der Gasturbine e

| | | |
|---|---|---|
| Temperarur Gaseintritt | T₃ | 245 °K |
| Druck vor Turbine | p₃ | 1,70 bar |
| Druck nach Turbine | p₄ | 1,00 bar |
| isentroper Turbinenwirkungsgrad | η_{i,T,} | 87,00% |
| Cp, Ges = m_{N2}/ m_{Ges} * c_{p N2} + m_{AR /} m_{Ges *} Cp _{Ar} | | 1,032 kJ/kgK |
| Isentropenexponent für Gemisch b (N₂/Ar ) | K_{N2/Ar} | 1,401969 |
| Enthalpie N₂ am Eintritt Turbine | | |
| h₃ = c_{pN2} * t₃ | | 252,90 kJ/kg |
| Enthalpie N₂ am Austritt Turbine | | |
| h_{Tt} = h₃ -η _{i,T*}c_{pN2Ar" *} T3 * [1-(p4/p3)^{(K-1)/K}-1] | | 221,8 kJ/kg |
| Austrittstemperatur aus der Turbine t₂ | | |
| T₄ = h_{TVD} / c_{pN2/Ar} | | 215 °K |
| Massenstrom N₂ + Ar | | 0,65 kg/s |
| Leistung Gasturbine d | | -20 kW |

### 2.12 Berechnung des Kältebedarf der CO₂-Wäsche

Bei der CO₂-Wäsche mit Methanol wird Lösungswärme frei.

Die CO₂-Wäsche soll isotherm durchgeführt werden. Dazu soll die
Lösungswärme durch verdampfendes Kältemittel abgeführt werden.

Die abzuführende Lösungswärme ist in etwa gleich groß wie die Verdampfungsenthalpie des CO₂
Die gleiche Energie muss bei der Desorption für die Verdampfung des CO₂ zugeführt werden.

| | |
|---|---|
| r = Verdampfungsenthalpe CO₂ bei 8 bar | 333,00 kJ/kg |
| Massenstrom CO₂ | 0,14 kg/s |
| Kältebedarf Abführung der Lösungswärme des CO₂ | 47 kW |

### 2.13 Berechnung der Erwärmung des N₂ Gemischs aus Turbine a

| Erwärmung im Kältemittelkondensator | | |
|---|---|---|
| Eintrittstemperatur N₂ Gemisch | 197,76 °K | |
| Austrittstemperatur N₂ Gemisch | 218,00 °K | |
| cₚ N₂ Gemisch | 1,03 kJ/kgK | |
| h ₑᵢₙ = cₚ * Tₑᵢₙ | 204,1 kJ/kg | |
| h ₐᵤₛ = cₚ * Tₐᵤₛ | 225,0 kJ/kg | |
| Δh | 20,89 kJ/kg | |
| Masse N₂-Gemisch | 1 kg/s | |
| Erwärmung N₂-Gemisch aus Turbine a | | 14 kW |

### 2.14 Berechnung der Erwärmung des N₂ Gemischs aus Turbine b

| Erwärmung im Kältemittelkondensator | | |
|---|---|---|
| Eintrittstemperatur N₂ Gemisch | 197,65 °K | |
| Austrittstemperatur N₂ Gemisch | 218,00 °K | |
| cₚ N₂ Gemisch | 1,03 kJ/kgK | |
| h ₑᵢₙ = cₚ * Tₑᵢₙ | 204,0 kJ/kg | |
| h ₐᵤₛ = cₚ * Tₐᵤₛ | 225,0 kJ/kg | |
| Δh | 21,01 kJ/kg | |
| Masse N₂-Gemisch | 1 kg/s | |
| Erwärmung N₂-Gemisch aus Turbine b | | 14 kW |

### 2.15 Berechnung der Erwärmung des N₂ Gemischs aus Turbine c

| Erwärmung im Kältemittelkondensator | | |
|---|---|---|
| Eintrittstemperatur N₂ Gemisch | 196,49 °K | |
| Austrittstemperatur N₂ Gemisch | 218,00 °K | |
| cₚ N₂ Gemisch | 1,03 kJ/kgK | |
| h ₑᵢₙ = cₚ * Tₑᵢₙ | 202,8 kJ/kg | |
| h ₐᵤₛ = cₚ * T ₐᵤₛ | 225,0 kJ/kg | |
| Δh | 22,20 kJ/kg | |
| Masse N₂-Gemisch | 1 kg/s | |
| Erwärmung N₂-Gemisch aus Turbine c | | 14 kW |

### 2.16 Berechnung der Erwärmung des N₂Gemischs aus Turbine d

| Erwärmung im Kältemittelkondensator | | |
|---|---|---|
| Eintrittstemperatur N₂ Gemisch | 202,25 °K | |
| Austrittstemperatur N₂ Gemisch | 218,00 °K | |
| cₚ N₂ Gemisch | 1,03 kJ/kgK | |
| h ₑᵢₙ = cₚ * Tₑᵢₙ | 208,8 kJ/kg | |
| hₐᵤₛ = cₚ * Tₐᵤₛ | 225,0 kJ/kg | |
| Δh | 16,25 kJ/kg | |
| Masse N₂-Gemisch | 1 kg/s | |
| Erwärmung N₂-Gemisch aus Turbine d | | 11 kW |

### 2.17 Berechnung der Abkühlung des Abgases

| | | |
|---|---|---|
| Eintrittstemperatur | 298 °K | |
| C_{pGes} | 0,99 kJ/kgK | |
| hₑᵢₙ | 296,5 kJ/kg | |
| Austrittstemperatur | 220 °K | |
| hₐᵤₛ | 218,9 kJ/kg | |
| delta h | | 77,61 kJ/kg |
| Massenstrom gesamt | | 0,792 kg/s |
| Kältebedarf Abkühlung des Abgases | | 61 kW |

### 2.18 Kältebedarf Kondensation H₂O

| | |
|---|---|
| x₁ Wassergehalt bei 298 °K und 1 bar | 0,020376 |
| pₛ Sättigungsdruck bei 298 °K | 0,03171 bar |
| p₂ Druck im Absorber | 8,00 bar |
| x₂ Wassergehalt bei p₂ und 298 °C = x₁*(1-pₛ)/(p₂-pₛ) | 0,002476049 |
| Massenstrom Abgas | 0,792 kg/s |
| Kondensat H₂O | 0,0020 kg/s |
| Verdampfungsenthalpie Wasser bei 0°C | 2.501 kJ/kg |
| Kältebedarf Kondensation H₂O im selbstreinigenden WT | 5 kW |

### 2.19 Erwärmung N₂-Gemisch 1,7 bar in der Wärmetaucherkomponente a

| | |
|---|---|
| Eintrittstemperatur Stickstoff | 218 °K |
| Austrittstemperatur Stickstoff | 245 °K |
| cₚ Stickstoff | 1,03 kJ/kgK |
| h ₑᵢₙ = cₚ * Tₑᵢₙ | 225,0 kJ/kg |
| h ₐᵤₛ = cₚ * Tₐᵤₛ | 252,9 kJ/kg |
| Δh | 27,87 kJ/kg |
| Masse N₂-Gemisch | 0,65 kg/s |
| Erwärmung N₂-Gemisch 1,7 bar | 18 kW |

### 2.20 Erwärmung N₂-Gemisch 1,0 bar in der selbstreinigenden Wärmetauscherkomponente 41

| | |
|---|---|
| Eintrittstemperatur Stickstoff | 218 °K |
| Austrittstemperatur Stickstoff | 295 °K |
| cₚ Stickstoff | 1,03 kJ/kgK |
| h ₑᵢₙ = cₚ * Tₑᵢₙ | 225,0 kJ/kg |
| h ₐᵤₛ = cₚ * Tₐᵤₛ | 304,5 kJ/kg |
| Δh | 79,48 kJ/kg |
| Masse N₂-Gemisch | 0,65 kg/s |
| Erwärmung N₂-Gemisch 1,0 bar | 52 kW |

### 2.21 Ermittlung der erforderlichen Menge Waschmittel bei 220°K

| | | |
|---|---|---|
| Gesamtdruck Abgas | 8,00 bar | |
| Partialdruck/Menge CO₂ | 0,071 m³/s | 0,97 bar |
| Partialdruck/Menge N₂ | 0,513 m³/s | 6,92 bar |
| Partialdruck/Menge Ar | 0,006 m³/s | 0,11 bar |
| Löslichkeit I_{CO2} bei 220°K und 0,97 bar Partialdruck | 0,050 m³/kg bar | |
| Waschmittelbedarf W_{Met}=G_{CO2}/ I_{CO2}*p_{CO2} | 1,38 kg/s | |

### 2.22 CO₂ Abscheidung durch Entlastung des Waschmittels bei 373°K (p_{CO2}= 8 bar)

| | | |
|---|---|---|
| Gesetz von Henry G_{CO2}=I_{CO2} x p_{CO2} x W_{Met} | | Druck CO₂ |
| Löslichkeit I_{CO2} bei 390°K und 8 bar Partialdruck | 0,0015 m³/kg bar | 8,00 bar |
| Menge CO₂ | 0,071 m³/s | |
| Menge Methanol Gₘₑₜ | 1,38 kg/s | |
| G_{CO2} im entlasteten Waschmittel | 0,017 m³/s | |
| Abgeschiedenes CO₂ bei Entlastung | 0,054 m³/s | 0,1089 kg/s |
| Abscheidung CO₂ bei Entlastung | 76,71% | |

### 2.23 CO₂ Abscheidung durch Regenerierung des Waschmittel bei 333°K (p_{CO2} = 1 bar)

| | | |
|---|---|---|
| Gesetz von Henry G_{CO2}=I_{CO2} x p_{CO2} x W_{Met} | | Druck CO₂ |
| Löslichkeit I_{CO2} bei 333°K und 1 bar | | |
| Partialdruck | 0,0015 m³/kg bar | 1,00 bar |
| Menge CO₂ | 0,017 Nm³/h | |
| Menge Methanol Gₘₑₜ | 1,38 kg/s | |
| G_{CO2} im regenerierten Waschmittel | 0,0021 m³/s | |
| Bei Regeneration abgeschiedenes CO₂ | 0,0145 m³/s | 0,0289 kg/s |
| Abscheidung bei Regenerierung | 20,38% | |
| Gesamtabscheidung CO₂ aus Abgas | 97,09% | |

### 2.24 Wärmebedarf bei Entlastung des beladenen Waschmittels bei 373°K

| | |
|---|---|
| r = Verdampfungsenthalpe CO₂ bei 8 bar | 333 kJ/kg |
| desorbierte Menge CO₂ | 0,109 kg/s |
| Verdampfungswärme CO₂ | 36,27 kW |

### 2.25 Wärmebedarf bei Regeneration des entlasteten Waschmittels bei 343°K

| | |
|---|---|
| r = Verdampfungsenthalpe CO₂ bei 1 bar | 350 kJ/kg |
| desorbierte Menge CO₂ | 0,0289 kg/s |
| Verdampfungswärme CO₂ | 10,13 kW |
| Gesamtwärmebedarf für Desorption | 46,40 kW |

### 1. Gasgemische und Stoffe

- 10: Abgas mit den Bestandteilen N₂, CO₂, H₂O
- 10a: verdichtetes Abgas mit den Bestandteilen N₂, CO₂, H₂O, Ar
- 10b: verdichtetes und gekühltes Abgas mit den Bestandteilen N₂, CO₂, Reste von H₂O
- 10c: Abgas, gekühlt auf die Prozesstemperatur
- 11: gewaschenes Abgas bei Prozessdruck
- 11a: gewaschenes Abgas teilentspannt
- 11b: gewaschenes Abgas entspannt auf Atmosphärendruck
- 11c: gewaschenes Abgas beladen mit H₂O
- 12a: Lösungsmittel regeneriert
- 12b: Lösungsmittel von einem Teil des CO₂ entlastet
- 13: Mit CO₂ beladenes Lösungsmittel
- 14: CO₂ in der Gasphase
- 14a: CO₂ flüssig bei Kondensationsdruck
- 14b: CO₂ flüssig bei Hochdruck
- 14c: CO₂ überkritisch
- 14d: CO₂ gasförmig bei niedrigem Druck
- 15: Prozessdampf
- 15a: Kondensat
- 16: Kältemittel flüssig
- 16a: Kältemittel gasförmig
- 17: Heizungswasser
- 18: Kühlwasser
- 19: Wasser (Kondensat)

### 2. Komponenten der Anlage

- 20: Verbrennungsmotor
- 21: Generator
- 22a: Abgasturboverdichter 1. Stufe
- 22b: Abgasturboverdichter 2. Stufe
- 23a: CO₂-Verdichter a
- 23b: CO₂-Verdichter b
- 30: Abhitzedampfkessel
- 31: Abgaswärmetauscher a
- 32: Abgaskühler a
- 33: Abgaswärmetauscher b
- 34: Abgaskühler b
- 35: Abgaswärmetauscher c
- 36: Abgaskühler c
- 40: Mehrkomponentenwärmetauscher
- 41: selbstreinigende Wärmetauscherkomponenten
- 42: Wärmetauscherkomponente a für teilentspannten Stickstoff
- 43: Wärmetauscherkomponente b für hoch verdichtetes CO₂
- 44: Motorklappen der selbstreinigenden Wärmetauscherkomponente
- 45: Rückschlagklappen der selbstreinigenden Wärmetauscherkomponente
- 46: Auslass für gewaschenes Abgas in die Atmosphäre
- 50: CO₂-Absorptionssäule
- 51: CO₂-Desorptionssäule
- 52: Hochdruckstufe der CO₂-Desorptionssäule
- 53: Niederdruckstufe der CO₂-Desorptionssäule
- 54: Heizregister für Methanol a
- 55: Heizregister für Methanol b
- 56: Drosselventil
- 57a: Methanol-Wärmetauscher a
- 57b: Methanol-Wärmetauscher b
- 57c: Methanol-Wärmetauscher c
- 58a: Methanol-Pumpe a
- 58b: Methanol-Pumpe b
- 60a: Entspannungsturbine a
- 60b: Entspannungsturbine b
- 60c: Entspannungsturbine c
- 60d: Entspannungsturbine d
- 60e: Entspannungsturbine e
- 61: Kältemittelkondensator
- 62: Kältemittelpumpe
- 63: Kältemittelverdampfer
- 64: CO₂-Kondensatorverdampfer
- 65: CO₂-Hochdruckpumpe
- 66: Anschlusspunkt für nachgelagerte CO₂-Verwendung
- 70: Kühlturm
- 71: Kühlwasserpumpe a
- 72: Kühlwasserpumpe b
- 73: Kühlwasserpumpe c
- 80a: Anschluss a Vorlauf/Rücklauf Heizung
- 80b: Anschluss b Vorlauf/Rücklauf Heizung
- 80c: Anschluss c Vorlauf/Rücklauf Heizung
- 80d: Anschluss d Vorlauf/Rücklauf Heizung
- 81: Heizungspumpe a
- 82: Heizungspumpe b
- 83: Heizungspumpe c
- 84: Heizungspumpe d

## Patentansprüche

1. Verfahren zur Tieftemperatur Abscheidung von Kohlendioxid aus Abgasen, aufweisend die folgenden Schritte:
- Verdichtung (3) des Abgases auf einen Druck, der so bestimmt wird, dass durch die Expansion des gewaschenen Abgases die im Verfahren benötigte Kälte bereit gestellt werden kann und Kühlung (3) des verdichteten Abgases auf einen vorbestimmten Wert oberhalb des Gefrierpunktes von Wasser
- Trocknung des Abgases,
- Kühlung (4) des Abgases auf eine vorbestimmte Temperatur T_{G},
- isotherme CO₂-Wäsche (5) des getrockneten Abgases durch physikalische Absorption von im Abgas enthaltenem Kohlendioxid (CO₂) mittels Durchleitung des getrockneten und gekühlten Abgasstroms durch ein CO₂₋absorbierendes Lösungsmittel, wobei die Temperatur des getrockneten Abgases der vorbestimmten Temperatur T_{G} entspricht,
- Abfuhr der bei der Gaswäsche (5) entstehenden Lösungswärme durch die Verdampfung (11) eines Kältemittels,
- Expandieren (8) des gewaschenen Abgases,
- Verflüssigung (10) des Kältemittels durch Wärmetausch mit dem expandierten gewaschenen Abgas mit nachfolgender erneuten Kältemittelverdampfung (11) zur Abfuhr der Lösungswärme und
- thermische Desorption (6) des im Lösungsmittel absorbierten CO₂ in zwei Druckstufen, wobei das Lösungsmittel/CO₂ Gemisch bis maximal zur Siedetemperatur des Lösungsmittels erwärmt wird, und wobei der Druck dem Verfahrensdruck der Gaswäsche entspricht und das unter dem Druck teilentlastete Lösungsmittel nachfolgend auf eine niedrigere Druckstufe entspannt wird, wobei ein weiterer Teil des gelösten CO₂ desorbiert wird.

2. Verfahren nach Anspruch 1, wobei das Lösungsmittel Methanol ist oder aufweist.

3. Verfahren nach einem der vorhergehenden Ansprüche, wobei das Lösungsmittel nach der Desorption des CO₂ wiederverwendet wird.

4. Verfahren nach einem der vorhergehenden Ansprüche, wobei das Abgas vor dem Verdichten bereits gekühlt (2) wird.

5. Verfahren nach einem der vorhergehenden Ansprüche, wobei das komprimierte Abgas einen Druck im Bereich von 8 bis 20 bar aufweist.

6. Verfahren nach Anspruch 4, wobei aus dem heißen Abgas in einem Abhitzdampfkessel Prozessdampf erzeugt wird, welcher bevorzugt zur Bereitstellung von thermischer Energie beim thermischen Desorptionsprozess des absorbierten CO₂ eingesetzt wird.

7. Verfahren nach einem der vorhergehenden Ansprüche, wobei das desorbierte CO₂ aus dem gasförmigen Zustand auf einen zur Einlagerung erforderlichen überkritischen Druck verdichtet wird.

8. Verfahren nach einem der Ansprüche 1 bis 6, wobei das gasförmige desorbierte CO₂ zunächst verflüssigt und nachfolgend im flüssigen Zustand verdichtet wird.

9. Verfahren nach einem der vorergehenden Ansprüche, wobei das gewaschene Abgas Arbeit leistend entspannt und/oder befeuchtet wird.

10. Vorrichtung zum Abscheiden von CO₂ aus Abgas umfassend einen Abgasstrom,
- einen Verdichter (22a) zum Verdichten des Abgasstroms auf einen Druck, der mindestens so hoch bestimmt wird, dass durch die Expansion des gewaschenen Abgases die im Verfahren benötigte Kälte bereit gestellt werden kann,
- stromab des Verdichters (22a) angeordnete und durch den Abgasstrom fluidführend mit diesem verbundenen Wärmetauscher (33) zum Kühlen des verdichteten Abgasstroms auf einen vorbestimmten Wert oberhalb des Gefrierpunktes von Wasser,
- einen stromab des Wärmetauschers (33) angeordneten und durch den Abgasstrom fluidführend mit dem Verdichter verbundenen weiteren Wärmetauscher (34) zur Kühlung und Trocknung des Abgasstroms,
- einen stromab des weiteren Wärmetauschers(34) angeordneten und durch den Abgasstrom fluidführend mit diesem verbundenen CO₂-Abscheider (50), aufweisend ein mit dem Abgasstrom in Kontakt tretendes flüssiges Lösungsmittel zumindest einen Kältemittelverdampfer (63) aufweisend,
- eine fluidführend mit dem CO₂-Abscheider (50) verbundene Desorptionseinheit (51) zur thermischen Desorption von im flüssigen Lösungsmittel gebundenen CO₂ in zwei Druckstufen,
- eine mit der Desorptionseinheit (51) fluidführend verbundene CO₂-Ableitung,
- fluidführend mit dem CO2-Abscheider (50) verbundene Entspannungsturbinen (60a, ..., 60e) für gewaschenes Abgas, und
- ein fluidführend mit den Entspannungsturbinen (60a, ..., 60e) verbundener Kältemittelkondensator (61), der fluidführend mit dem Kältemittelverdampfer (63) verbunden ist.

11. Vorrichtung nach Anspruch 10, wobei die CO₂-Ableitung einen Verdichter (23a) für bei niedrigem Druck desorbiertes CO₂ und eine Zusammenführung für das bei hohem Druck desorbierte CO₂ mit dem verdichteten und bei niedrigem Druck desorbiertes CO₂ aufweist.

12. Vorrichtung nach einem der Ansprüche 10 und 11, wobei stromab des CO₂-Absorbers (50) eine oder mehrere der Entspannungsturbinen (60a, ..., 60e) und/oder ein Wärmetauscher (40) zur Entspannung, Erwärmung und/oder Befeuchtung des gewaschenen Abgases fluidführend angeordnet ist.

13. Vorrichtung nach Anspruch 12, wobei der Wärmetauscher (40) zur Erwärmung des gewaschenen Fluids stromab des Verdichters eine thermische Verbindung mit dem Abgasstrom aufweist.

## Claims

1. A method for the low temperature separation of carbon dioxide from exhaust gases, having the following steps:
- compressing (3) the exhaust gas to a pressure that is determined such that expansion of the scrubbed exhaust gas can provide the cold required in the method and cooling (3) the compressed exhaust gas to a predetermined value above the freezing point of water,
- drying the exhaust gas,
- cooling (4) the exhaust gas to a predetermined temperature T_{G},
- isothermally CO₂-scrubbing (5) the dried exhaust gas by physical absorption of carbon dioxide (CO₂) present in the exhaust gas by passing the dried and cooled exhaust gas stream through a CO₂-absorbing solvent, wherein the temperature of the dried exhaust gas corresponds to the predetermined temperature T_{G},
- dissipating the heat of solution arising during gas scrubbing (5) by vaporizing (11) a refrigerant,
- expanding (8) the scrubbed exhaust gas,
- liquefying (10) the refrigerant by heat exchange with the expanded scrubbed exhaust gas with subsequent renewed refrigerant evaporation (11) to dissipate the heat of solution and
- thermally desorbing (6) the CO₂ absorbed in the solvent in two pressure stages, wherein the solvent/CO₂ mixture is heated at most to the boiling temperature of the solvent, and wherein the pressure corresponds to the method pressure of the gas scrubber and the solvent partially depressurized under the pressure is subsequently expanded to a lower pressure stage, wherein a further portion of the dissolved CO₂ is desorbed.

2. The method according to Claim 1, wherein the solvent is or includes methanol.

3. The method according to any one of the preceding claims, wherein the solvent is reused after the desorption of the CO₂.

4. The method according to any one of the preceding claims, wherein the exhaust gas is already cooled (2) prior to compression.

5. The method according to any one of the preceding claims, wherein the compressed exhaust gas has a pressure in the range from 8 to 20 bar.

6. The method according to Claim 4, wherein process steam is generated from the hot exhaust gas in a waste heat steam boiler, which process steam is preferably used to provide thermal energy in the thermal desorption process of the absorbed CO₂.

7. The method according to any one of the preceding claims, wherein the desorbed CO₂ is compressed from the gaseous state to a supercritical pressure required for storage.

8. The method according to any one of Claims 1 to 6, wherein the gaseous desorbed CO₂ is first liquefied and subsequently compressed in the liquid state.

9. The method according to any one of the preceding claims, wherein the scrubbed exhaust gas is expanded and/or humidified while performing work.

10. An apparatus for separating CO₂ from exhaust gas comprising an exhaust gas stream,
- a compressor (22a) for compressing the exhaust gas stream to a pressure that is determined to be at least high enough to provide the cold required in the method by expansion of the scrubbed exhaust gas,
- a heat exchanger (33) arranged downstream of the compressor (22a) and fluidically connected thereto by the exhaust gas stream for cooling the compressed exhaust gas stream to a predetermined value above the freezing point of water,
- a further heat exchanger (34) arranged downstream of the heat exchanger (33) and fluidically connected to the compressor by the exhaust gas stream for cooling and drying the exhaust gas stream,
- a CO₂ separator (50) arranged downstream of the further heat exchanger (34) and fluidically connected thereto by the exhaust gas stream, the CO₂ separator (50) having a liquid solvent that comes into contact with the exhaust gas stream having at least one refrigerant evaporator (63),
- a desorption unit (51) fluidically connected to the CO₂ separator (50) for thermally desorbing CO₂ bound in the liquid solvent in two pressure stages,
- a CO₂ outflow line fluidically connected to the desorption unit (51),
- expansion turbines (60a, ..., 60e) for the scrubbed exhaust gas fluidically connected to the CO₂ separator (50), and
- a refrigerant condenser (61) fluidically connected to the expansion turbines (60a, ..., 60e), which refrigerant condenser (61) is fluidically connected to the refrigerant evaporator (63).

11. The apparatus according to Claim 10, wherein the CO₂ outflow line has a compressor (23a) for CO₂ desorbed at low pressure and includes bringing together of the CO₂ desorbed at high pressure with the compressed CO₂ desorbed at low pressure.

12. The apparatus according to either one of Claims 10 and 11, wherein one or more of the expansion turbines (60a, ..., 60e) and/or a heat exchanger (40) is/are arranged fluidically downstream of the CO₂ absorber (50) for expanding, heating and/or humidifying the scrubbed exhaust gas.

13. The apparatus according to Claim 12, wherein, downstream of the compressor, the heat exchanger (40) has a thermal connection to the exhaust gas stream for heating the scrubbed fluid.

## Revendications

1. Procédé de captage de dioxyde de carbone à partir de gaz d'échappement à basse température, présentant les étapes suivantes :
- compression (3) des gaz d'échappement à une pression qui est déterminée de telle manière que la dilatation des gaz d'échappement lavés permet de fournir le froid nécessaire pour le procédé et refroidissement (3) des gaz d'échappement comprimés à une valeur prédéfinie supérieure au point de congélation de l'eau
- séchage des gaz d'échappement,
- refroidissement (4) des gaz d'échappement à une température prédéfinie T_{G},
- lavage isotherme du CO₂ (5) des gaz d'échappement séchés par absorption physique de dioxyde de carbone (CO₂) contenu dans les gaz d'échappement au moyen du passage du flux de gaz d'échappement séché et refroidi à travers un solvant absorbant le CO₂, la température des gaz d'échappement séchés correspondant à la température prédéfinie T_{G},
- évacuation de la chaleur de dissolution produite lors du lavage des gaz (5) par l'évaporation (11) d'un fluide frigorigène,
- dilatation (8) des gaz d'échappement lavés,
- liquéfaction (10) du fluide frigorigène par échange de chaleur avec les gaz d'échappement lavés dilatés suivie d'une nouvelle évaporation de fluide frigorigène (11) pour évacuer la chaleur de dissolution et
- désorption thermique (6) du CO₂ absorbé dans le solvant à deux niveaux de pression, le mélange solvant/CO₂ étant chauffé jusqu'à, au maximum, la température d'ébullition du solvant et la pression correspondant à la pression de procédé du lavage des gaz et le solvant partiellement déchargé sous la pression étant ensuite détendu à un niveau de pression inférieur, une autre partie du CO₂ dissout étant désorbée.

2. Procédé selon la revendication 1, dans lequel le solvant est ou présente du méthanol.

3. Procédé selon l'une quelconque des revendications précédentes, dans lequel le solvant est réutilisé après la désorption du CO₂.

4. Procédé selon l'une quelconque des revendications précédentes, dans lequel les gaz d'échappement sont déjà refroidis (2) avant la compression.

5. Procédé selon l'une quelconque des revendications précédentes, dans lequel les gaz d'échappement comprimés présentent une pression comprise entre 8 et 20 bar.

6. Procédé selon la revendication 4, dans lequel de la vapeur de processus est générée à partir des gaz d'échappement chauds dans une chaudière à vapeur de récupération de chaleur, ladite vapeur de processus étant de préférence utilisée pour fournir de l'énergie thermique lors du processus de désorption thermique du CO₂ absorbé.

7. Procédé selon l'une quelconque des revendications précédentes, dans lequel le CO₂ désorbé est comprimé à partir de l'état gazeux à une pression supercritique nécessaire pour le stockage.

8. Procédé selon l'une quelconque des revendications 1 à 6, dans lequel le CO₂ gazeux désorbé est d'abord liquéfié et ensuite comprimé à l'état liquide.

9. Procédé selon l'une quelconque des revendications précédentes, dans lequel les gaz d'échappement lavés sont détendus et/ou humidifiés en fournissant un travail.

10. Dispositif de captage de CO₂ à partir de gaz d'échappement comprenant un flux de gaz d'échappement,
- un compresseur (22a) destiné à comprimer le flux de gaz d'échappement à une pression qui est déterminée à un niveau tel que la dilatation des gaz d'échappement lavés permet de fournir le froid nécessaire pour le procédé,
- un échangeur de chaleur (33) agencé en aval du compresseur (22a) et relié à celui-ci de manière transportant les fluides par le flux de gaz d'échappement pour le refroidissement du flux de gaz d'échappement comprimé à une valeur prédéfinie supérieure au point de congélation de l'eau,
- un autre échangeur de chaleur (34) agencé en aval de l'échangeur de chaleur (33) et relié au compresseur de manière transportant les fluides par le flux de gaz d'échappement pour le refroidissement et le séchage du flux de gaz d'échappement,
- un séparateur de CO₂ (50) agencé en aval de l'autre échangeur de chaleur (34) et relié à celui-ci de manière transportant les fluides par le flux de gaz d'échappement, présentant un solvant liquide entrant en contact avec le flux de gaz d'échappement présentant au moins un évaporateur de fluide frigorigène (63),
- une unité de désorption (51) reliée au séparateur de CO₂ (50) de manière transportant les fluides pour la désorption thermique de CO₂ lié dans le solvant liquide à deux niveaux de pression,
- une dérivation de CO₂ reliée à l'unité de désorption (51) de manière transportant les fluides,
- des turbines de détente (60a, ..., 60e) pour des gaz d'échappement lavés, reliées au séparateur de CO₂ (50) de manière transportant les fluides, et
- un condensateur de fluide frigorigène (61) relié aux turbines de détente (60a, ..., 60e) de manière transportant les fluides et relié à l'évaporateur de fluide frigorigène (63) de manière transportant les fluides.

11. Dispositif selon la revendication 10, dans lequel la dérivation de CO₂ présente un compresseur (23a) pour le CO₂ désorbé à basse pression et un point de réunion pour le CO₂ désorbé à haute pression et le CO₂ comprimé et désorbé à basse pression.

12. Dispositif selon l'une quelconque des revendications 10 et 11, dans lequel une ou plusieurs des turbines de détente (60a, ..., 60e) et/ou un échangeur de chaleur (40) sont agencés, de manière transportant les fluides, en aval de l'absorbeur de CO₂ (50) pour la détente, le chauffage et/ou l'humidification des gaz d'échappement lavés.

13. Dispositif selon la revendication 12, dans lequel l'échangeur de chaleur (40) présente, pour chauffer le fluide lavé, une liaison thermique avec le flux de gaz d'échappement en aval du compresseur.
